# FASCICULE DE BREVET EUROPEEN

(11) **EP 1 129 117 B1**
(45) Date de publication et mention de la délivrance du brevet: **13.09.2006**
(21) Numéro de dépôt: 99972230.9
(22) Date de dépôt: 09.11.1999
(51) Int. Cl.: C08F 220/24, D06M 15/277

(54) **POLYMERES FLUORES PAR POLYMERISATION EN MINIEMULSION**
FLUORIERTE POLYMERE DURCH MINIEMULSIONSPOLYMERISATION
POLYMERS FLUORINATED BY POLYMERISATION IN MINI-EMULSION

(30) Priorité: 13.11.1998 FR 9814272
(43) Date de publication de la demande: 05.09.2001
(73) Titulaire: E.I. DU PONT DE NEMOURS AND COMPANY, Wilmington, DE 19898 (US)
(72) Inventeur: TEMBOU NZUDIE, Denis, F-27470 Serquigny (FR); JUHUE, Didier, F-92300 Levallois-Perret (FR); CORPART, Jean-Marc, F-95110 Sannois (FR)
(74) Mandataire: Morf, Jan Stefan
(86) Numéro de dépôt international: PCT/FR1999/002744
(87) Numéro de publication internationale: WO 2000/029457

(56) Documents cités:
- EP-A- 0 182 516
- EP-A- 0 511 539
- WO-A-94/22928
- DE-A- 1 419 505

## Description

L'invention se rapporte au domaine des émulsions aqueuses et en particulier à un procédé de préparation d'émulsions aqueuses de polymères fluorés.

Les copolymères fluorés sont utilisés pour diverses applications, notamment pour le traitement hydrophobe et oléophobe de différents substrats tels que textiles, cuirs, papiers. Ces copolymères fluorés sont généralement préparés par copolymérisation dans un solvant organique ou selon la technique de polymérisation en émulsion aqueuse. Pour des raisons de contraintes en matière d'environnement, ils sont généralement préparés par copolymérisation en émulsion aqueuse. Pour les applications de revêtement hydrophobe et oléophobe, ces copolymères sont obtenus à partir d'au moins un monomère acrylique perfluoré et d'au moins un monomère non fluoré, le plus souvent un acrylate ou méthacrylate d'alkyle. DE 14 19 505 A décrit un procédé pour rendre à la fois hydrofuges et oléfuges les matières fibreuses entre utilisation de les copolymères d'acrylates ou méthacrylates de fluoralkyle et de méthylol-acrylamide ou de méthylol-methacrylamide, ainsi que leur application à des matières fibreuses.

La copolymérisation des monomères perfluorés selon la technique en émulsion classique est un problème techniquement difficile. En effet la forte hydrophobie de ces monomères diminue considérablement, d'une part la contribution de l'amorçage de la polymérisation dans la phase aqueuse et d'autre part, la diffusion de ces monomères des gouttes réservoir vers les particules en croissance. En raison de ces propriétés particulières des monomères acryliques perfluorés, leur mise en oeuvre pour obtenir une émulsion aqueuse nécessite l'emploi d'un solvant organique hydrosoluble. Celui-ci doit être un bon solvant des monomères et ne doit pas faire précipiter le polymère formé comme c'est le cas de certains alcools.

Le solvant le plus couramment utilisé est l'acétone (voir par exemple les brevets FR 1 532 053 ou FR 2 202 515). Cependant, les contraintes en matière de sécurité et de transport incitent un grand nombre de producteurs à commercialiser des produits sans point éclair. Il est évidemment possible, si la formulation tensio-active a été soigneusement sélectionnée, de distiller le solvant ayant servi à la copolymérisation.

Mais ceci, d'une part, diminue la productivité, induit un surcoût de consommation d'énergie et, d'autre part, confère à l'émulsion une mauvaise stabilité dans le temps.

L'emploi de solvants non inflammables tels que l'éthylène glycol, le propylène glycol et leurs dérivés est décrit dans le brevet FR 2 175 332, mais ces composés présentent généralement un mauvais pouvoir solvant et doivent être associés à de l'acétone. Dans certaines émulsions fluorées du commerce, l'acétone a été remplacée par d'excellents solvants à haut point éclair tels que la N-méthyl pyrrolidone, la γ-butyrolactone. L'emploi de diols lourds tels que le dipropylène glycol, le pentanediol, l'hexanediol et le tripropylène glycol pour obtenir des émulsions acryliques fluorées sans point éclair est décrit dans le brevet JP 60.40182. Cependant, il s'avère que de telles émulsions présentent plusieurs défauts liés à la faible volatilité des solvants tels que :
le séchage difficile des articles textiles et cuir qu'il n'est pas possible de porter à haute température, et/ou
le défaut de réticulation du copolymère sur textiles, dû au séchage incomplet du solvant et à la présence de groupements hydroxyle résiduaires.

Quelles que soient les solutions apportées par l'homme du métier en terme de choix de solvant, il apparaît qu'il se pose des problèmes :
- de composés organiques volatiles induisant des risques de pollution, de sécurité et de transport si le solvant n'est pas distillable,
- de productivité et de surcoût de consommation d'énergie si la formulation comprend un solvant à bas point d'ébullition qui est distillé en fin de polymérisation.

De plus l'émulsion classique pose un problème de stabilité et de rendement dans la mesure où la polymérisation en émulsion conduit à la formation d'un taux de coagulum important (1- 8 %) qu'il faut détruire.

Selon l'invention, par coagulum on entend, le polymère sous forme de floc, non stabilisé et qui sédimente dans le réacteur de polymérisation, par opposition au polymère présent dans la particule de latex et qui est stabilisé de façon colloïdale par des tensio-actifs.

Le problème que cherche à résoudre l'invention est la mise au point d'une émulsion aqueuse de polymères fluorés ne contenant pas de composés organiques volatils, stable et sans coagulum tout en respectant les exigences industrielles telles que l'économie d'énergie et la productivité.

La solution a été trouvée grâce à une combinaison particulière consistant en
1) l'utilisation d'un procédé dit procédé de polymérisation en miniémulsion sans l'utilisation de cosolvant organique, et
2) le choix judicieux d'un mélange de monomères contenant impérativement de l'acrylamide ou un de ses dérivés.

Le procédé repose sur une première étape d'émulsification spécifique du mélange eau/monomères/tensioactifs, à l'aide d'un moyen energétique tel que les ultra-sons, moulin colloidal, homogénéiseur haute tension, générant ainsi de fines gouttelettes de monomères dans l'eau. L'étape d'émulsification est suivie d'une étape de polymérisation.

Le procédé de l'invention se distingue des procédés classiques de fabrication des émulsions perfluorées, d'une part par un taux de cosolvant organique dans la formulation inférieur à 0,2 % en poids de l'émulsion et d'autre part par un taux de coagulum inférieur à 1% en poids du poids total de monomères. Il présente ainsi l'intérêt d'être plus productif et de générer peu de composé organique volatil, source de pollution.

Ainsi, en utilisant la technique de polymérisation dite polymérisation en miniémulsion, connue dans la littérature pour la polymérisation de nombreux monomères vinyliques et acryliques et en particulier acryliques à chaîne alkyle plus ou moins longue, les monomères acryliques perfluorés peuvent être copolymérisés avec des monomères non fluorés avec les avantages suivants :
- pas d'utilisation de cosolvant organique, donc moins de composés organiques volatils, pas de perte de productivité liée à la distillation et pas de surcoût de consommation d'énergie,
- un rendement plus élevé car il ne se forme pas de coagulum même à des taux d'incorporation de monomères perfluorés élevés,
- pas d'utilisation de cotensioactif qui est un composé gras de faible solubilité dans l'eau (hexadécanol, hexadécane) couramment utilisé pour la miniémulsion (pouvant perturber les propriétés finales).

Un des objets de l'invention est un procédé d'obtention de polymères fluorés par polymérisation en miniémulsion consistant en la polymérisation d'un mélange de monomères dispersés dans l'eau et stabilisé par au moins un tensio-actif caractérisé en ce que le taux de cosolvant organique dans le milieu réactionnel est inférieure à 0,2 % en poids du poids total de l'émulsion

Par polymères fluorés selon l'invention on entend les polymères contenant au moins 20 % en poids de motifs dérivés par polymérisation d'au moins un monomère fluoré.

Le procédé de l'invention est basé sur deux étapes consistant en
a) - la mise en émulsion d'un mélange de monomères contenant :
   de 20 à 99,9 % en poids d'au moins un monomère choisi parmi les monomères (méth)acryliques fluorés (A),
   de 0 à 65 % en poids d'au moins un monomère choisi parmi les monomères (méth)acryliques ou vinyliques non fluorés (B),
   de 0,1 à 15 % en poids d'au moins un monomère polaire (C),
   à l'aide de moyens énergétiques de mise en émulsion tels que les ultra-sons, moulin colloidal, homogénéiseur haute tension, et en
b) - la polymérisation dudit mélange à une température allant de 20 à 100°C à l'aide d'amorceurs radicalaires.

Les monomères A sont choisis parmi les monomères (méth)acryliques fluorés répondant aux formules suivantes : 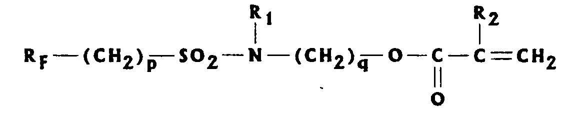 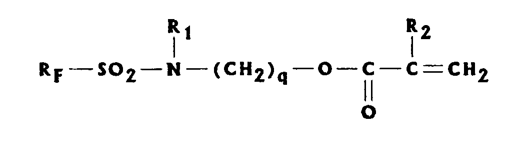 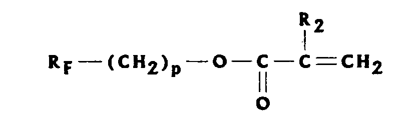 dans lesquelles R_{F} représente un radical perfluoré à chaîne linéaire ou ramifiée de 2 à 20 atomes de carbone, p et q, identiques ou différents, représentent chacun un nombre entier allant de 1 à 20 et de préférence de 1 à 4, R₁ représente un radical alkyle, linéaire ou ramifié, contenant de 1 à 4 atomes de carbone, et R₂ représente un atome d'hydrogène ou un radical méthyle.

Les monomères non fluorés (B) sont généralement des acrylates ou méthacrylates d'alkyle tels que, par exemple, le méthacrylate de butyle, le méthacrylate d'éthyl-2 hexyle et les acrylates et méthacrylates de stéaryle et de béhényle, des acrylates et méthacrylates porteurs d'enchaînement oxyéthylé comme le méthacrylate d'éthyl triglycol, des monomères vinyliques comme les chlorures de vinyle et de vinylidène, l'acétate de vinyle.

Parmi les monomères polaires (C), on peut citer les méthacrylates et acrylates de N,N-diméthylaminoéthyle ou de N-tertiobutylaminoéthyle et leurs dérivés quaternisés, les acides acrylique et méthacrylique, les monomères porteurs de groupe acide sulfonique ou hydroxyle tels que les acrylates et méthacrylates d'hydroxyéthyle ou hydroxypropyle.

Des agents réticulants sont généralement utilisés pour fixer le copolymère sur le support et le rendre insoluble dans les solvants. Il s'agit de dérivés d'acrylamide comme le N-méthylolacrylamide et le N-méthylolméthacrylamide, ou d'acrylate ou de méthacrylate de chloro hydroxy propyle.

Les tensio-actifs utilisés sont anioniques ou cationiques tels que les dérivés sulfosuccinates et ammonium quaternaires, par exemple le bis-tridecylsulfosuccinate de sodium.

Ils sont associés ou non à des tensio-actifs non ioniques.

Les masses moléculaires sont réglées à l'aide d'agents de transfert de chaîne tels que des mercaptans ou par la technique d'introduction des monomères. La copolymérisation peut être amorcée entre 20 et 140 ° C au moyen d'amorçeurs hydrosolubles ou organosolubles de type peroxyde (comme l'eau oxygénée) ou persels (comme les persulfates) ou du type azo tel que l'acide 4,4'azo bis (cyano-4 pentanoïque) ou le chlorhydrate d'azo-bis (amidino propane), ou l'azobisisobutyronitrile.

La polymérisation est précédée d'une étape d'émulsification du mélange comprenant les monomères, l'eau et les tensio-actifs. Il est important de réaliser cette émulsification par des moyens énergiques de mise en émulsion, comme les ultra-sons ou les homogénéiseurs du type Manton-Gaulin et moulin colloidal. L'énergie mécanique apportée par ces appareils permet de cisailler le mélange et de former des fines gouttelettes de monomère stabilisées par le tensio-actif. Ces fines gouttelettes de monomères sont des sites de polymérisation générant des particules de polymère de tailles comparables (50 - 500 nm).

Après la mise en émulsion, la polymérisation peut être réalisée en utilisant indifféremment les procédés classiquement employés pour la polymérisation en émulsion : procédé batch, semi continu ou continu.

Les émulsions de polymères fluorés selon l'invention peuvent être utilisées pour le traitement hydrophobe et oléophobe d'une grande variété de supports, tels que textiles, moquettes, cuirs, papiers, matériaux de construction. Leur application peut être réalisée, après dilution à l'eau, par foulardage, trempage, enduction ou pulvérisation. Elles peuvent être formulées avec différents additifs tels que résines de fixation, catalyseurs, anti-statiques, anti-mousses, ou fongicides.

Les exemples suivants illustrent l'invention sans la limiter. Sauf indication contraire, les parties et pourcentages sont exprimées en poids.

### Exemple 1

### a) préparation du latex

Dans un réacteur de 1000 parties en volume, chauffé par une double enveloppe thermostatée, muni d'une agitation ancre et d'un réfrigérant à reflux, on introduit :
- 480 parties d'eau déminéralisée
- 0,12 partie de Borax (Na2B205)
- 3,99 parties de bis-tridécyl sulfosuccinate de sodium
- 8,34 parties d'un mélange d'acrylates polyfluorés de formule : 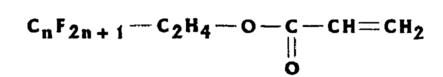
où n est égal à 8, 10, 12 et 14 dans des rapports respectifs en poids de 63:25:10:2.

Le mélange est porté à 65 ° C sous agitation pendant 30 minutes, puis passé sous ultrason (Sonifier Branson) pendant une minute. A ce mélange ultrasoné, est ajouté sous agitation :
- 58,6 parties de méthacrylate de 2 éthyl hexyle
- 0,36 partie d'acide méthacrylique
- 1,26 partie de N-méthylol acrylamide
- 59,8 parties d'un mélange d'acrylates polyfluorés de formule : 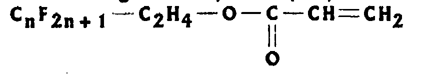
où n est égal à 8, 10, 12 et 14 dans des rapports respectifs en poids de 63:25:10:2.

Ce mélange est passé aux ultrasons (Sonifier Branson) pendant une minute puis homogénéisé avec un homogénéiseur haute pression (Microfluidizer) en réalisant 6 passages à 60°C.

La miniémulsion ainsi obtenue est constituée de fines gouttelettes de monomères ayant un diamètre moyen de particule de l'ordre de 100 - 200 nm. Elle est transférée dans un réacteur de 1000 parties en volume, chauffé par une double enveloppe thermostatée, muni d'une agitation ancre et d'un réfrigérant à reflux. Cette miniémulsion est portée sous balayage d'azote à 88 ° C et la polymérisation est amorcée par 0,84 g de persulfate de potassium dissous dans 7 g d'eau. Une quantité équivalente de solution d'amorceur est coulée en continu dans le réacteur pendant une heure. La polymérisation est poursuivie pendant une heure supplémentaire. Le balayage d'azote est maintenu pendant toute la durée de la polymérisation.

On obtient un latex de copolymère perfluoré sans coagulum et ayant la composition massique suivante : 53,4 % de motifs perfluorés, 45,8 % de méthacrylate de 2 éthyl hexyle, 0,3 % d'acide méthacrylique et 0,47 % de N-méthylol acrylamide. L'extrait sec est de 20 % et le diamètre moyen de particule est de 130 nm.

### b) Application sur cuir

Le latex de copolymère perfluoré obtenu est dilué dans l'eau, à température ambiante, jusqu'à obtenir une solution aqueuse contenant 1 % de matières actives.

Cette solution est ensuite pulvérisée en croix sur les échantillons de cuir à l'aide d'un pulvérisateur Volumair T 21.

La quantité déposée est en moyenne de 130 g/m². Après un séchage de 24 heures à température ambiante, les cuirs sont évalués de la manière suivante:

### Tests d'oléophobie

L'oléophobie est mesurée suivant le test décrit dans "AATCC Technical Manual", test method 118 (1992), qui évalue la non-mouillabilité du substrat par une série de liquide huileux dont les tensions superficielles sont de plus en plus faibles. La cotation du substrat traité est définie comme la valeur maximale du liquide test qui ne mouille pas le support. Les liquides tests employés dans l'évaluation sont répertoriés dans le tableau suivant :

| Cotation | Liquides-tests pour mesurer l'oléophobie | Tension superficielle à 25°C (mN/m) |
|---|---|---|
| 1 | Nujol | 31,5 |
| 2 | Nujol / n-hexadécane (65/35 en volume) | 29,6 |
| 3 | n-hexadécane | 27,3 |
| 4 | n-tétradécane | 26,4 |
| 5 | n-dodécane | 24,7 |
| 6 | n-décane | 23,5 |
| 7 | n-octane | 21,4 |
| 8 | n-heptane | 19,8 |

### Tests d'hydrophobie

L'effet hydrophobe est mesuré à l'aide de solutions-tests numérotées de 1 à 10 et constituées par des mélanges eau/isopropanol (IPA) dans les proportions pondérales suivantes :

| Solutions-tests | Eau | Isopropanol |
|---|---|---|
| 1 | 90 | 10 |
| 2 | 80 | 20 |
| 3 | 70 | 30 |
| 4 | 60 | 40 |
| 5 | 50 | 50 |
| 6 | 40 | 60 |
| 7 | 30 | 70 |
| 8 | 20 | 80 |
| 9 | 10 | 90 |
| 10 | 0 | 100 |

Ces tests consistent à déposer sur les substrats traités des gouttes de ces mélanges, puis à observer l'effet produit. On cote, en donnant pour valeur, le numéro correspondant à la solution qui n'a pas pénétré ou mouillé le substrat après 30 secondes de contact.

Dans cet exemple, les échantillons de cuir traités sont du stain agneau. Les résultats de ce traitement sont consignés dans le tableau ci-après :

| | AATCC 118 | Eau/IPA |
|---|---|---|
| traité | 4 | 5 |
| non traité | 0 | 0 |

Ce tableau montre l'efficacité remarquable de ce produit.

### Exemple 2

### a) Préparation du latex

Dans un réacteur de 1000 parties en volume, chauffé par une double enveloppe thermostatée, muni d'une agitation ancre et d'un réfrigérant à reflux, on introduit :
- 480 parties d'eau déminéralisée
- 0,12 partie de Borax (Na2B2O5)
- 3,99 parties de tridécyl sulfosuccinate de sodium
- 8,34 parties d'un mélange d'acrylates polyfluorés de formule : 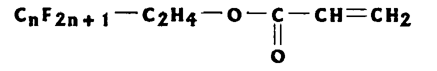
où n est égal à 8, 10, 12 et 14 dans des rapports respectifs en poids de 63:25:10:2.

Le mélange est porté à 65°C sous agitation pendant 30 minutes, puis passé sous ultrason (Sonifier Branson) pendant une minute. A ce mélange ultrasoné, est ajouté sous agitation :
- 28,58 parties de méthacrylate de 2 éthyl hexyle
- 0,27 partie d'acide méthacrylique
- 0,95 partie de N-méthylol acrylamide
- 90,2 parties d'un mélange d'acrylates polyfluorés de formule : 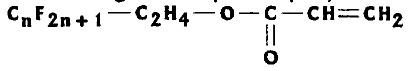
où n est égal à 8, 10, 12 et 14 dans des rapports respectifs en poids de 63:25:10:2.

Ce mélange est passé aux ultrasons (Sonifier Branson) pendant une minute puis homogénéisé avec un homogénéiseur haute pression (Microfluidizer) en réalisant 6 passages à 60°C.

La miniémulsion ainsi obtenu est constituée de fines gouttelettes de monomères ayant un diamètre moyen de particule de l'ordre de 100 - 200 nm. Elle est transférée dans un réacteur de 1000 parties en volume, chauffé par une double enveloppe thermostatée, muni d'une agitation ancre et d'un réfrigérant à reflux. Cette miniémulsion est portée sous balayage d'azote à 88°C et la polymérisation est amorcée par 0,84 g de persulfate de potassium dissous dans 7 g d'eau. Une quantité équivalente de solution d'amorceur est coulée en continu dans le réacteur pendant une heure. La polymérisation est poursuivie pendant une heure supplémentaire. Le balayage d'azote est maintenu pendant toute la durée de la polymérisation.

On obtient un latex de copolymère perfluoré sans coagulum et ayant la composition massique suivante : 77,1 % de motifs perfluorés, 22,4 % de méthacrylate de 2 éthyl hexyle, 0,2 % d'acide méthacrylique et 0,4 % de N-méthylol acrylamide. L'extrait sec est de 20 % et le diamètre moyen de particule est de 120 nm.

### b). Application sur cuir

Reprenant les conditions décrites par l'exemple 1, le tableau suivant exprime les résultats obtenus pour l'exemple 2 :

| | AATCC 118^{.} | Eau/IPA |
|---|---|---|
| traité | 4 | 4 |
| non traité | 0 | 0 |

### Exemple 3

### a) Préparation du latex

Dans un réacteur de 1000 parties en volume, chauffé par une double enveloppe thermostatée, muni d'une agitation ancre et d'un réfrigérateur à reflux, on introduit :
- 670 parties d'eau déminéralisée
- 13 parties de chlorure de dicocodiméthylammonium
- 12 parties d'un mélange d'alkyphénol éthoxylés de HLB 15
- 200 parties d'un mélange d'acrylates polyfluorés de formule : 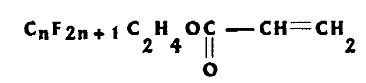
où n est égal à 8, 10, 12 et 14 dans des rapports respectifs en poids de 63:25:10:2.
- 65 parties de méthacrylate de stéaryle
- 8.5 parties de N-méthylol acrylamide en solution à 48 % dans l'eau
- 9.2 parties de N-méthylol méthacrylamide en solution à 60 % dans l'eau
- 0.27 parties de n-dodécyl mercaptan.

Ce mélange est porté à 65°C sans agitation pendant 30 minutes, puis passé sous ultrason (Sonifier Branson) pendant une minute ; puis homogénéisé avec un homogénéiseur haute pression (Microfluidizer) en réalisant 6 passages à 60°C.

La miniémulsion ainsi obtenue est constituée de fines gouttelettes de monomères ayant un diamètre moyen de l'ordre de 150-200 nm. Elle est transférée dans un réacteur de 1000 parties en volume, chauffé par une double enveloppe thermostatée, muni d'une agitation ancre et d'un réfrigérant à reflux. Cette miniémulsion est portée à 70°C sous balayage d'azote et la polymérisation est amorcée par 2.03 parties de chlorhydrate d'azobis (amidinopropane) dissoutes dans 20 parties d'eau. La polymérisation se déroule en deux heures.

Après refroidissement, on obtient un latex de copolymère perfluoré sans coagulum et ayant la composition massique suivante : 70.7 % de motifs perfluorés, 23 % de méthacrylate de stéaryle, 3 % de N-méthylol acrylamide, et 3.3 % de N-méthylol méthacrylamide. L'extrait-sec est de 33 %, et est ramené par dilution avec de l'eau à 20 %. Le diamètre moyen des particules est de 150 nm.

### b) Application sur textile

Un bain de foulardage contenant 25 g/l du latex de copolymère fluoré précédemment obtenu et 1.5 g/l d'acide acétique dans de l'eau et est préparé à température ambiante. Les tissus sont ensuite foulardés dans ce bain avec un taux d'exprimage de l'ordre de 50 %. Après séchage, les tissus sont traités pendant une minute à 160°C dans un thermocondenseur BENZ.

Les tissus ainsi traités sont ensuite testés en oléophobie et hydrophobie. L'oléophobie est testée selon le test AATCC 118 décrit plus haut. L'hydrophobie est évaluée selon un test de résistance ou mouillage par l'eau, utilisé pour contrôler l'imperméabilisation du tissu. (Spray-Test selon AATCC Technical Manual - Test Method 22-1972).

Un tissu de polyamide (PA) a été traité.

Le tableau ci-dessous montre les performances très intéressantes de ce produit.

| | AATCC 118 | Spray Test |
|---|---|---|
| 1 PA | 6 | 100 |

## Revendications

1. Procédé d'obtention de polymères fluorés par polymérisation en miniémulsion, en deux étapes consistant en
a) la mise en émulsion d'un mélange de monomères contenant :
de 20 à 99,9 % en poids d'au moins un monomère choisi parmi les monomères (méth)acryliques fluorés (A),
de 0,1 à 15 % en poids d'au moins un monomère choisi parmi les méthacrylates et acrylates de N,N-diméthylaminoéthyle ou de N-tertiobutylaminoéthyle et leurs dérivés quaternisés, les acides acrylique et méthacrylique, les monomères porteurs de groupe acide sulfonique ou hydroxyle tels que les acrylates et méthacrylates d'hydroxyéthyle ou hydroxypropyle
de 0 à 65 % en poids d'au moins un monomère choisi parmi les monomères acryliques ou vinyliques non fluorés (B)
à l'aide de moyens énergétiques de mise en émulsion tels que ultra-sons, moulin colloidal, homogénéiseur haute tension, et en
b) la polymérisation dudit mélange à une température allant de 20 à 100°C à l'aide d'amorceurs radicalaires, le taux en cosolvant organique étant inférieur à 0,2% en poids du poids total de l'émulsion.

2. Procédé selon la revendication 1 **caractérisé en que** que le mélange de monomères est stabilisé par au moins un tensio-actif choisi dans le groupe contenant les tensio-actifs non ioniques, anioniques ou cationiques tels que les dérivés de polyéthoxylés sulfosuccinate ou d'ammonium quaternaire.

3. Procédé selon la revendication 1 ou 2 **caractérisé en ce que** le monomère fluoré A est choisi dans le groupe I contenant les monomères répondant aux formules suivantes : 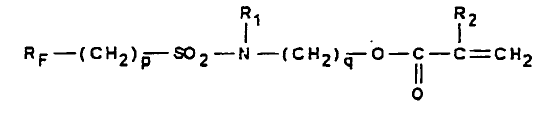 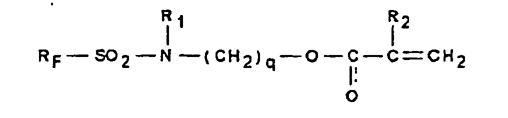 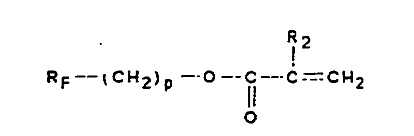 dans lesquelles R_{F} représente un radical perfluoré à chaîne linéaire ou ramifiée de 2 à 20 atomes de carbone, p et q, identiques ou différents, représentent chacun un nombre entier allant de 1 à 20 et de préférence de 1 à 4, R₁ représente un radical alkyle, linéaire ou ramifié, contenant de 1 à 4 atomes de carbone, et R₂ représente un atome d'hydrogène ou un radical méthyle.

4. Procédé selon l'une des revendications précédentes **caractérisé en ce que** le monomère B est choisi dans le groupe contenant :
- les (méth)acrylates d'alkyles en C₁ - C₂₂
- les (méth)acrylates dont le radical porte un enchaînement oxyéthylé
- les monomères vinyliques tels que le chlorure de vinyle, l'acétate de vinyle.

5. Procédé selon l'une des revendications précédentes **caractérisé en ce que** l'amorceur est choisi dans le groupe contenant :
- les peroxydes
- les persels tels que les persulfates
- les composés azoïques.

6. Dispersion aqueuse de polymères fluorés telle qu'on peut l'obtenir selon le procédé de l'une quelconque des revendications précédentes dont la teneur en cosolvant organique est inférieur à 0,2 % en poids du poids total de l'émulsion et le taux en coagulum étant inférieur à 1 % en poids du poids total de monomères.

7. Application de la dispersion aqueuse de la revendication 6 dans le traitement hydrophobe et oléophobe de différents supports tels que le cuir, le textile, les moquettes, le papier et les matériaux de construction.

## Claims

1. Process for obtaining fluoropolymers by mini-emulsion polymerisation in two steps, consisting of
a) emulsifying a monomer mixture containing:
20 to 99.9% by weight of least one monomer selected from among the fluorinated (meth)acrylic monomers (A),
0.1 to 15% by weight of at least one monomer selected from among N,N-dimethylaminoethyl or N-tert.butylaminoethyl methacrylates and acrylates and the quaternary derivatives thereof, acrylic and methacrylic acids, monomers carrying sulphonic acid or hydroxyl groups such as hydroxyethyl or hydroxypropyl acrylates and methacrylates
0 to 65% by weight of at least one monomer selected from among the non-fluorinated acrylic or vinyl monomers (B)
using powered emulsifying means such as ultrasound, a colloidal mill, a high-pressure homogeniser, and
b) polymerising said mixture at a temperature ranging from 20 to 100°C using radical initiators, the amount of organic cosolvent being less than 0.2% by weight of the total weight of the emulsion.

2. Process according to claim 1, **characterised in that** the monomer mixture is stabilised by at least one surfactant selected from the group containing the non-ionic, anionic or cationic surfactants such as polyethoxylated sulphosuccinate or quaternary ammonium derivatives.

3. Process according to claim 1 or 2, **characterised in that** the fluorinated monomer A is selected from group I containing the monomers corresponding to the following formulae: 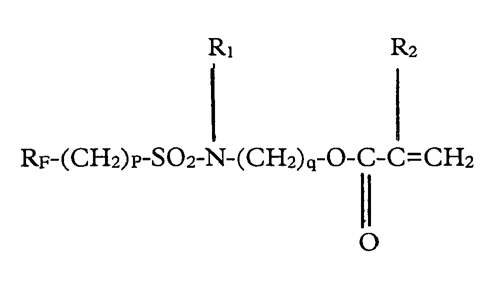 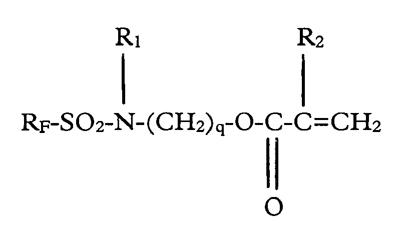 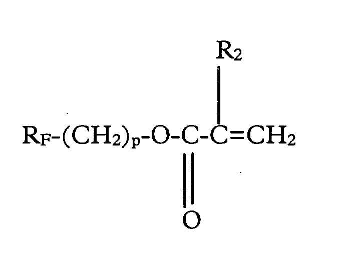 wherein R_{F} represents a straight-chain or branched perfluoro radical having 2 to 20 carbon atoms, p and q, which may be identical or different, each represent an integer from 1 to 20 and preferably from 1 to 4, R₁ represents a straight-chain or branched alkyl radical containing 1 to 4 carbon atoms, and R₂ represents a hydrogen atom or a methyl radical.

4. Process according to one of the preceding claims, **characterised in that** the monomer B is selected from the group containing:
- the C₁-C₂₂ alkyl (meth)acrylates
- the (meth)acrylates the radical of which carries an ethoxylated chain
- the vinyl monomers such as vinyl chloride and vinyl acetate.

5. Process according to one of the preceding claims, **characterised in that** the initiator is selected from the group containing:
- the peroxides
- the persalts such as the persulphates
- the azo compounds.

6. Aqueous dispersion of fluoropolymers obtainable according to the process recited in any one of the preceding claims, wherein the content of organic cosolvent is less than 0.2% by weight of the total weight of the emulsion and the level of coagulum is less than 1% by weight of the total weight of monomers.

7. Use of the aqueous dispersion according to claim 6 in the water-repellent and oil-repellent treatment of various substrates such as leather, textiles, fitted carpets, paper and construction materials.

## Patentansprüche

1. Verfahren zur Herstellung von fluorierten Polymeren durch Miniemulsionspolymerisation in zwei Stufen, bestehend aus:
a) Emulgieren einer Monomermischung, die Folgendes beinhaltet:
20 bis 99,9 Gew.-% von wenigstens einem Monomer, das aus fluorierten (Meth)acrylmonomeren (A) ausgewählt ist,
0,1 bis 15 Gew.-% von wenigstens einem Monomer, das aus Methacrylaten und Acrylaten von N,N-Dimethylaminoethyl oder N-tert-Butylaminoethyl und deren quaternisierten Derivaten, Acryl- und Methacrylsäuren, den Trägermonomeren von Sulfon- oder Hydroxylsäuregruppen wie Acrylate und Methacrylate von Hydroxyethylen oder Hydroxypropylen ausgewählt ist,
0 bis 65 Gew.-% von wenigstens einem Monomer, das aus nicht fluorierten Acryl- oder Vinylmonomeren (B) ausgewählt ist,
mittels Emulgierungsenergiemitteln wie Ultraschall, einer Kolloidmühle, einem Hochspannungshomogenisator, und aus
b) Polymerisieren des Gemischs bei einer Temperatur von 20 bis 100°C mittels eines Radikalinitiators, wobei der Anteil an organischem Co-Solvent geringer als 0,2 Gew.-% des Gesamtgewichts der Emulsion ist.

2. Verfahren nach Anspruch 1, **dadurch gekennzeichnet, dass** die Monomermischung mit wenigstens einem Tensid stabilisiert wird, das aus der Gruppe ausgewählt ist, die nichtionische, anionische oder kationische Tenside wie polyethoxylierte Sulfosuccinat- oder Quartärammoniumsalzderivate enthalten.

3. Verfahren nach Anspruch 1 oder 2, **dadurch gekennzeichnet, dass** das fluorierte Monomer A aus der Gruppe I ausgewählt wird, die die Monomere enthält, die den folgenden Formeln entsprechen: 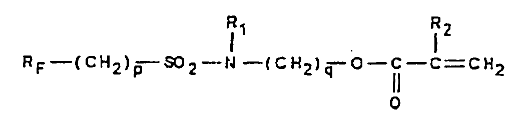 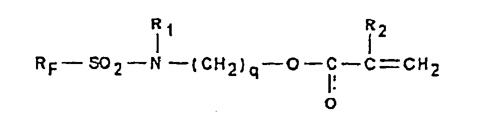 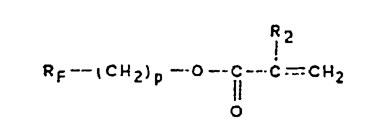 in denen R_{F} ein linear- oder verzweigtkettiges perfluoriertes Radikal mit 2 bis 20 Kohlenstoffatomen p und q repräsentiert, die gleich oder unterschiedlich sind und jeweils eine ganze Zahl von 1 bis 20 und vorzugsweise von 1 bis 4 repräsentieren, R₁ ein lineares oder verzweigtes Alkylradikal mit 1 bis 4 Kohlenstoffatomen und R₂ ein Wasserstoffatom oder ein Methylradikal repräsentiert.

4. Verfahren nach einem der vorherigen Ansprüche, **dadurch gekennzeichnet, dass** das Monomer B aus der Gruppe ausgewählt ist, die Folgendes beinhaltet:
- C₁-C₂₂ Alkyl(meth)acrylate,
- (Meth)acrylate, deren Radikal eine Oxyethylverkettung hat,
- Vinylmonomere wie Vinylchlorid, Vinylacetat.

5. Verfahren nach einem der vorherigen Ansprüche, **dadurch gekennzeichnet, dass** der Initiator aus der Gruppe ausgewählt ist, die Folgendes beinhaltet:
- Peroxyde,
- Persalze wie Persulfate,
- Azoverbindungen.

6. Wässrige Dispersion aus fluorierten Polymeren, wie sie mit einem Verfahren nach einem der vorherigen Ansprüche hergestellt werden können, deren Gehalt an organischem Co-Solvent geringer als 0,2 Gew.-% des Gesamtgewichts der Emulsion ist und deren Gerinnselanteil kleiner als 1 Gew.-% des Gesamtgewichts der Monomere ist.

7. Anwendung der wässrigen Disperson nach Anspruch 6 bei der Hydrophobisierungs- und Oleophobisierungsbehandlung unterschiedlicher Träger wie Leder, Textilien, Teppichböden, Papier und Baustoffen.
